(19) Europäisches Patentamt
European Patent Office
Office européen des brevets

(11) **EP 4 009 001 B1**

(12) **EUROPEAN PATENT SPECIFICATION**

(45) Date of publication and mention
of the grant of the patent:
**22.04.2026 Bulletin 2026/17**

(21) Application number: **20211965.7**

(22) Date of filing: **04.12.2020**

(51) International Patent Classification (IPC):
***G01C 21/34*** *(2006.01)*    ***B60W 60/00*** *(2020.01)*
***G08G 1/0968*** *(2006.01)*

(52) Cooperative Patent Classification (CPC):
**G01C 21/3415; G01C 21/3492;** B60W 2050/146;
B60W 2556/40; B60W 2556/50

(54) **ROAD SEGMENT SELECTION ALONG A ROUTE TO BE TRAVELLED BY A VEHICLE**

AUSWAHL EINES STRASSENABSCHNITTS ENTLANG EINER VON EINEM FAHRZEUG ZU FAHRENDEN STRECKE

SÉLECTION D'UN SEGMENT DE ROUTE LE LONG D'UN TRAJET À PARCOURIR PAR UN VÉHICULE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**08.06.2022 Bulletin 2022/23**

(73) Proprietor: **Zenuity AB**
**417 56 Göteborg (SE)**

(72) Inventor: **PANAHANDEH, Ghazaleh**
**414 67 Göteborg (SE)**

(74) Representative: **Valea AB**
**Box 1098**
**405 23 Göteborg (SE)**

(56) References cited:
**US-A1- 2019 257 661    US-B2- 10 816 349**

**Description**

TECHNICAL FIELD

The present disclosure relates to road segment selection along a route to be travelled by a vehicle.

BACKGROUND

Vehicle expeditions play a vital role in field test data collection for verification of active safety and autonomous driving. With a high demand of verification data, today millions of kilometres of data are collected during such vehicle expeditions. With limited capacity of computing resources as well as storage, and further to reduce carbon footprint, careful expedition route planning is desirable to enable efficient data collection. Commonly, with an aim to travel as much as possible within a relevant Operational Design Domain, ODD - which for instance may be exemplified by a predetermined speed and/or speed range - a vehicle occupant - such as the driver - of an expedition vehicle, may prior to carrying out an expedition, plan a route to be travelled e.g. with support from a digital map and live traffic information, or the route planning may have been performed in advance such as by an operator e.g. by analyzing statistical and/or historical traffic flows and by considering the traffic infrastructure, based on which a route may be planned and subsequently provided to an expedition vehicle driver. However, such expedition route planning may be far from efficient, for instance in that the e.g. operator and/or e.g. vehicle driver may not be aware of near future traffic situations and/or may not have extensive knowledge of the traffic environments in the area of the impending vehicle expedition.

Such route planning is known from US 2019/257661 A1 and US 10 816 349 B2.

SUMMARY OF THE INVENTION

It is therefore an object of embodiments herein to provide an approach for in an improved and/or alternative manner determine at least a portion of a route to be travelled by a vehicle.

The object above may be achieved by the subject-matter disclosed herein. Embodiments are set forth in the appended claims, in the following description and in the drawings.

The disclosed subject-matter relates to a method performed by a route planning system of a vehicle for road segment selection along a route to be travelled by said vehicle, as disclosed by appended claim 1.

The disclosed subject-matter further relates to a route planning system of a vehicle, as disclosed by appended claim 7.

Furthermore, the disclosed subject-matter relates to a vehicle comprising a route planning system as described herein.

Moreover, the disclosed subject-matter relates to a computer program product comprising a computer program containing computer program code means arranged to cause a computer or a processor to execute the steps of the route planning method described herein, stored on a computer-readable medium or a carrier wave.

The disclosed subject-matter further relates to a non-volatile computer readable storage medium having stored thereon said computer program product.

Thereby, there is introduced an approach supporting route planning - e.g. applicable for a vehicle expedition - in view of set ODD requirements. That is, since there is determined with support from a positioning system, a geolocation of a vehicle in view of a digital map, said vehicle is localized geographically in view of said digital map, for instance attributed with at time stamp. Accordingly, a current location of the vehicle may be established, such as at or essentially at a start of a route to be travelled by the vehicle, or as such a route is ongoing. Moreover, that is, since there is identified in the digital map based on the vehicle geolocation, an upcoming road junction which the vehicle is approaching and/or is located at, which upcoming road junction comprises two or more upcoming road segments, there is found in the digital map along a road or road segment along which the vehicle is travelling and/or is positioned, a road junction ahead of said vehicle - for instance represented by an intersection, road exit or road entry - branching into at least two different and/or separate road segments. Furthermore, that is, since there is derived traffic information data applicable for a map area of the digital map covering a plurality of road segments including the two or more upcoming road segments, the route planning system may learn of real-time or essentially real-time traffic information - such as for instance current traffic flow - relevant for a geographical area- such as a city or part of a city - of the digital map covering the upcoming road segments and potentially further road segments. Accordingly, it may be derived for said area and/or road segments thereof, for instance ongoing traffic jams and/or traffic flow speeds, which may be utilized by the route planning system for assessment. Moreover, that is, since there is selected a road segment out of the two or more upcoming road segments by feeding one or more parameters related to the traffic information data and one or more parameters related to the vehicle geolocation through a neural network trained to select the road segment rendering greatest extent of travelling within one or more set Operational Design Domain, ODD, requirements, there is chosen among the upcoming road segments with support from said neural network, the road segment contributing to optimizing travelling according to set ODD requirements. That is, by training - in simulation and/or in real traffic - a neural network using as input thereto one or more parameters related to ODD requirements of interest to fulfill during travelling - such as during a vehicle expedition - along with parameters related to vehicle geolocation(s), the road junctions and/or the road segments of the map area of the digital map, point(s) of time, and/or derived traffic information pertinent said point(s) of time, said neural network may be trained to learn selection of road segment(s) for maximum and/or optimal travelling - applicable for said map area - in view of set ODD requirements. Accordingly, by then utilizing said trained network during real-time travelling with the vehicle - for instance during a vehicle expedition such as exemplified above - by feeding to the trained network one or more traffic information data parameters currently valid for the map area along with one or more vehicle geolocation parameters currently valid, there is output and/or may be derived therefrom the one road segment of the upcoming road segments calculated to be the best option for enabling the vehicle - if travelling along the selected road segment - to maximize travelling within the set ODD requirements. Consequently, with the introduced inventive concept taking into account dynamic characteristics of the current traffic situation - which greatly may depend on geographical location, time of day, day of week, etc. - set ODD requirements may be achieved in an efficient manner, not the least should the introduced approach be continuously or intermittently repeated as the vehicle travels within a geographical area corresponding to the map area of the digital map.

For that reason, an approach is provided for in an improved and/or alternative manner determine at least a portion of a route to be travelled by a vehicle.

The technical features and corresponding advantages will be discussed in further detail in the following.

BRIEF DESCRIPTION OF THE DRAWINGS

The various aspects of the non-limiting embodiments, including particular features and advantages, will be readily understood from the following detailed description and the accompanying drawings, in which:

> **Fig. 1** illustrates a schematic view of an exemplifying route planning system according to embodiments of the disclosure;

> **Fig. 2** is a schematic block diagram illustrating an exemplifying route planning system according to embodiments of the disclosure; and

> **Fig. 3** is a flowchart depicting an exemplifying method performed by a route planning system according to embodiments of the disclosure.

DETAILED DESCRIPTION

Non-limiting embodiments of the present disclosure will now be described more fully hereinafter with reference to the accompanying drawings, in which currently preferred embodiments of the disclosure are shown. This disclosure may, however, be embodied in many different forms and should not be construed as limited to the embodiments set forth herein. Like reference characters refer to like elements throughout the disclosure. Dashed lines of some boxes in the figures indicate that these units or actions are optional and not mandatory.

In the following, according to embodiments herein which relate to road segment selection along a route to be travelled by a vehicle, there will be disclosed an approach supporting route planning- e.g. applicable for a vehicle expedition - in view of set ODD requirements.

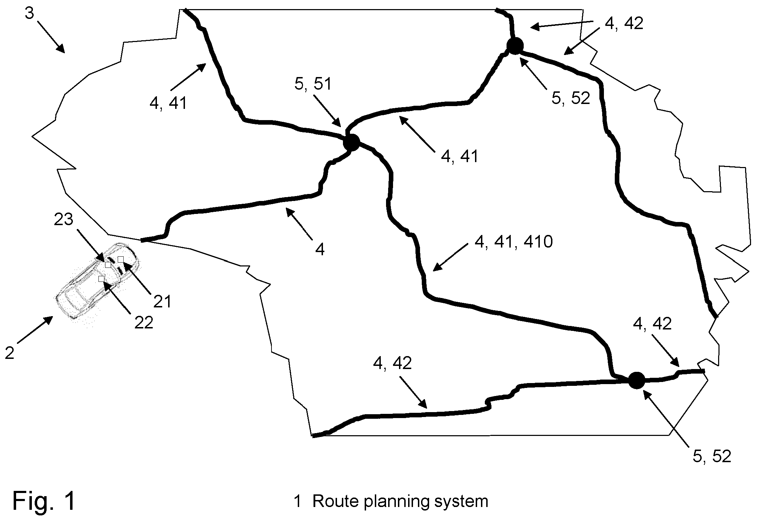

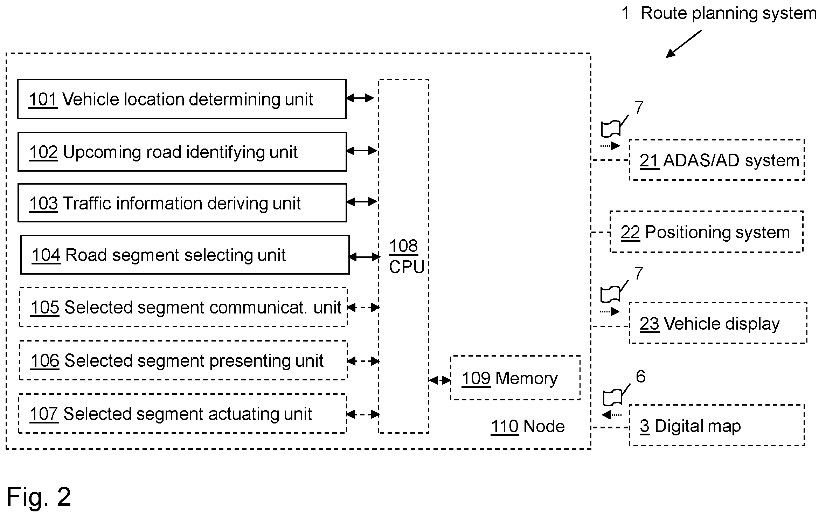

Referring now to the figures, there is depicted in **Figs. 1, 2** a respective schematic view and schematic block diagram of an exemplifying **route planning system 1** according to embodiments of the disclosure. The route planning system 1 is at least partly provided onboard a **vehicle 2,** for instance comprised therein. Said vehicle 2 may in an exemplifying manner be set up for travelling a route, such as for carrying out a vehicle expedition - for instance for field test data collection for verification of e.g. active safety and autonomous driving - about to start and/or already ongoing.

The exemplifying vehicle 2 may be represented by any arbitrary - e.g. known - manned or unmanned vehicle, for instance an engine-propelled or electrically-powered vehicle such as a car, truck, lorry, van, bus and/or tractor, and may further for instance be represented by an expedition vehicle and/or field test data collecting vehicle. Moreover, the term "vehicle" may according to an example refer to "autonomous and/or at least partly autonomous vehicle", "automated and/or at least partly automated vehicle", "driverless and/or at least partly driverless vehicle", and/or "self-driving and/or at least partly self-driving vehicle", accomplished with support from an optional **advanced driver assistance system, ADAS, or automated driving, AD, system 21.** Said ADAS or AD system 21 - where an ADAS system potentially may be considered a subset and/or portion of an AD system - may refer to any arbitrary ADAS and/or AD system e.g. known in the art and/or yet to be developed, comprising electronic system(s) adapted to aid a vehicle driver while driving and/or comprising a combination of various components that can be defined as systems where perception, decision making, and/or operation of the vehicle 2 are performed by electronics and machinery instead of a human driver. The vehicle 2 and/or the ADAS or AD system 21 may thus comprise, be provided with and/or have on-board an optional perception system (not shown) and/or similar system and/or functionality adapted to estimate surroundings of the vehicle 2, and subsequently adapted to estimate world views of the surroundings e.g. with support from a - e.g. commonly known - high definition, HD, map, and/or an equivalent and/or successor thereof. Such an exemplifying perception system or similar system may refer to any commonly known system and/or functionality, e.g. comprised in one or more electronic control modules, ECUs, and/or nodes of the vehicle 2 and/or the ADAS or AD system 21, adapted and/or configured to interpret sensory information - relevant for driving of the vehicle 2 - to identify e.g. objects, obstacles, vehicle lanes, relevant signage, appropriate navigation paths etc. The exemplifying perception system or similar system - which may be adapted to support e.g. sensor fusion, tracking, localization etc. - may thus be adapted to rely on sensory information. Such exemplifying sensory information may for instance be derived from one or more - e.g. commonly known - sensors comprised in and/or provided on-board the vehicle 2 adapted to sense and/or perceive the vehicle's 2 whereabouts and/or surroundings, for instance represented by one or a combination of one or more of a **positioning system 22** e.g. GNSS such as GPS, odometer, inertial measurement units and/or surrounding detecting sensors, such as image capturing devices e.g. cameras, radar, lidar, ultrasonics etc.

The phrase "method performed by a route planning system" may refer to "computer implemented method performed by a route planning system", whereas "route planning system" may refer to "travel planning system", "route optimization system" and/or "road segment selecting system". The phrase "route planning system of a vehicle", on the other hand, may refer to "route planning system for a vehicle", "route planning system on-board and/or at least partly comprised in a vehicle", and according to an example further to "route planning system at least partly comprised in a vehicle and/or at least partly comprised in one or more automotive clouds and/or off-board servers adapted to communicate with said vehicle". Moreover, "for road segment selection along a route to be travelled by said vehicle" may refer to "for road segment selection along a route to be driven by said vehicle", "for road segment selection along a route travelled by said vehicle" and/or "for road segment selection at one or more road junctions of one or more roads travelled by said vehicle", and according to an example further to "for determining and/or selecting a road segment and/or route to be travelled by said vehicle in view of a predeterminable ODD", "for supporting vehicle travelling within one or more predeterminable ODD requirements" and/or "for supporting vehicle travelling with one or more predeterminable ODD requirements met and/or fulfilled".

The route planning system 1 is - e.g. by means of a **vehicle location determining unit 101** - adapted and/or configured for determining with support from a positioning system 22, a geolocation of the vehicle 2 in view of a **digital map 3.** Thereby, the vehicle 2 is localized geographically in view of said digital map 3, for instance attributed with a time stamp. Accordingly, a current location of said vehicle 2 may be established, such as at or essentially at a start of a route to be travelled by the vehicle 2 - e.g. a vehicle expedition - or as such a route is ongoing.

Determining the geolocation of the vehicle 2 with support from a positioning system 22 in view of digital map 3 - e.g. along with a time indication - may be accomplished in any arbitrary - e.g. known - manner, potentially with additional support from dead reckoning computations and/or similar approaches. The positioning system 22 may thus be represented by any arbitrary feasible - e.g. known - sensors and/or functionality adapted to sense and/or determine whereabouts and/or geographical position - such as of a vehicle - e.g. via GNSS such as GPS. Similarly, the digital map 3 may be represented by any arbitrary feasible - e.g. known - electronic map comprising any arbitrary number of roads, **road segments 4** and **road junctions 5** - such as road intersections, road exits, road entrances and the like - which according to an example may be referred to as nodes 5. The digital map 3 may thus be represented for instance by a relatively advanced electronic map such as a high definition, HD, map, or alternatively a less advanced electronic map such as a graph of a road network comprising at least road segments 4 and road junctions 5. Said digital map 3 and/or said positioning system 22 may be at least partly comprised in - and/or provided on-board - the vehicle 2, for instance in association with the optional ADAS or AD system 21, the optional perception system or similar system discussed above, and/or a - e.g. known - optional navigation system.

The phrase "determining [...] a geolocation of said vehicle" may refer to "determining [...] a location of said vehicle", "determining [...] a vehicle geolocation" and/or "deriving [...] a geolocation of said vehicle", and according to an example further to "determining [...] a geolocation of said vehicle attributed with and/or comprising a time stamp and/or time indication" and/or "determining [...] a geolocation of said vehicle expressed in XY or XYZ coordinates of and/or in said digital map". "With support from a positioning system", on the other hand, may refer to "with input from a positioning system", "from a positioning system", "with support at least from a positioning system" and/or "with support from a positioning system comprised in and/or on-board said vehicle". Furthermore, "in view of a digital map" may refer to "in view of a digital road map" and/or "relative a digital map", and according to an example further to "in view of a real-time digital map". Moreover, according to an example, the phrase "determining [...] a geolocation of said vehicle in view of a digital map" may refer to "mapping [...] a geolocation of said vehicle to a digital map".

The route planning system 1 is furthermore - e.g. by means of an **upcoming road identifying unit 102** - adapted and/or configured for identifying in the digital map 3 based on the vehicle geolocation, an **upcoming road junction 51** which the vehicle 2 is approaching and/or is located at, which upcoming road junction 51 comprises two or more **upcoming road segments 41.** Thereby, by confronting the digital map 3 there is found along a road or road segment 4 along which the vehicle 2 is travelling and/or is positioned, a road junction 51 ahead of said vehicle 2 - for instance represented by an intersection, road exit or road entry - branching into at least two different and/or separate road segments 41.

The upcoming road junction 51 and subsequently its two or more upcoming road segments 41 may be identified in any arbitrary feasible - e.g. known - manner, such as by analyzing the vehicle's 2 geolocation - and/or said vehicle's 2 travelling direction - in view of and/or relative the digital map 3. Moreover, the upcoming road junction 51 may be represented by any arbitrary road junction - e.g. as indicated above by an intersection, road exit and/or road entry - and further be of any arbitrary feasible dimensions and/or be any arbitrary feasible distance ahead of the vehicle 2 and/or its geolocation, for instance ranging from essentially zero meters up to thousands of meters or even tens of kilometers. Similarly, the upcoming road segments 41 branching from said upcoming road junction 51 may respectively be of any arbitrary feasible dimensions, respectively go in any arbitrary feasible direction(s), and/or respectively be of any arbitrary feasible length, for instance merely a few meters up to thousands of meters or even tens of kilometers, further for instance limited by a respective **subsequent road junction 52.**

The phrase "identifying [...] an upcoming road junction" may refer to "determining and/or finding [...] an upcoming road junction", whereas "upcoming road junction" may refer to "road junction ahead" and/or merely "road junction". Moreover, "identifying in said digital map based on said vehicle geolocation, an upcoming road junction" may refer to "identifying in said digital map a road junction ahead of and/or at said vehicle geolocation". The phrase "upcoming road junction comprising two or more upcoming road segments", on the other hand, may refer to "upcoming road junction branching and/or dividing into two or more upcoming road segments" and/or "upcoming road junction comprising two or more upcoming separate and/or different road segments", whereas "upcoming road segments" may refer to "upcoming road sections and/or road portions", "upcoming stretches of road" and/or merely "road segments".

The route planning system 1 is furthermore - e.g. by means of a **traffic information deriving unit 103** - adapted and/or configured for deriving **traffic information data 6** applicable for a map area of the digital map 3 covering a plurality of road segments 4 including the two or more upcoming road segments 41. Thereby, the route planning system 1 may learn of real-time or essentially real-time traffic information 6 - such as for instance current traffic flow - relevant for a geographical area - such as a city or part of a city - of the digital map 3 covering the upcoming road segments 41 and potentially further road segments 4. Accordingly, it may be derived for said area and/or road segments 4, 41 thereof, for instance ongoing traffic jams, traffic flow speeds, distributions and/or clusters of e.g. parked vehicles and/or cyclists along road segment(s) 4 etc., which may be utilized by the route planning system 1 for assessment.

The traffic information data 6 may be derived in any arbitrary feasible - e.g. known - manner, such as by receiving and/or deriving traffic information from one or more traffic information providing entities and/or systems collecting, compiling, presenting, providing and/or broadcasting traffic flow related information in known manners. Such an optional traffic information providing entity and/or system may accordingly as known gather information from e.g. one or more traffic monitoring cameras and/or one or more electronic devices such as mobile phones and/or vehicles which positions and/or movements individually or combined may be tracked and contribute to gathering of traffic information. Such traffic information may optionally - for instance by map provider(s) - be embedded in an electronic map, such as the digital map 3, from which the traffic information data 6 then may be derived. Said traffic information data 6 may be represented by any arbitrary feasible traffic information, such as traffic flow information, relevant for one or more road segments 4 within said map area of the digital map 3 covering at least the identified upcoming road segments 41. The map area, on the other hand, may be represented by and/or correspond to any arbitrarily sized and/or dimensioned region, such as e.g. a city and/or rural area, or a portion thereof.

The phrase "deriving traffic information data" may refer to "receiving, reading and/or fetching traffic information data", "deriving traffic information" and/or "deriving traffic information data out of traffic information". Said phrase may further refer to "deriving real-time or essentially real-time traffic information data" and/or "deriving live or essentially live traffic information data", and according to an example further to "deriving traffic flow information data" and/or "deriving, with support from said digital map, and/or one or more traffic information providing entities and/or systems, traffic information data". Moreover, "traffic information data applicable for a map area" may refer to "traffic information data relevant for and/or pertinent a map area", whereas "map area of said digital map" may refer to "geographical area of said digital map" and/or "portion of said digital map".

The route planning system 1 is furthermore - e.g. by means of a **road segment selecting unit 104** - adapted and/or configured for selecting a **road segment 410** out of the two or more upcoming road segments 41 by feeding one or more parameters related to the traffic information data 6 and one or more parameters related to the vehicle geolocation through a neural network trained to select the road segment 410 rendering greatest extent of travelling within one or more set Operational Design Domain, ODD, requirements. Thereby, with support from said neural network, there is chosen among the upcoming road segments 41, the road segment 410 contributing to optimizing travelling according to set ODD requirements. That is, by training - in simulation and/or in real traffic - a neural network using as input thereto one or more parameters related to ODD requirements of interest to fulfill during travelling - such as during a vehicle expedition - along with parameters related to vehicle geolocation(s), the road junctions 5 and/or the road segments 4 of the map area of the digital map 3, point(s) of time, and/or derived traffic information pertinent said point(s) of time, said neural network may be trained to learn selection of road segment(s) 4 for maximum and/or optimal travelling - applicable for said map area - in view of set ODD requirements. Accordingly, by then utilizing said trained network during real-time travelling with the vehicle 2 - for instance during a vehicle expedition such as exemplified above - by feeding to the trained network one or more traffic information data parameters currently valid for the map area along with one or more vehicle geolocation parameters currently valid, there is output and/or may be derived therefrom the one road segment 410 of the upcoming road segments 41 calculated to be the best option for enabling the vehicle 2 - if travelling along the selected road segment 410 - to maximize travelling within the set ODD requirements. Consequently, with the introduced inventive concept taking into account dynamic characteristics of the current traffic situation - which greatly may depend on geographical location, time of day, day of week, etc. - set ODD requirements may be achieved in an efficient manner, not the least should the introduced approach be continuously or intermittently repeated as the vehicle 2 travels within a geographical area corresponding to the map area of the digital map 3.

In that the neural network is trained to select the upcoming road segment 41 rendering greatest extent of travelling within one or more set ODD requirements, the selected upcoming road segment 410 may be selected in that said selected upcoming road segment 410 itself fulfills - at least to some extent - the set ODD requirement(s), and/or that one or more **subsequent road segments 42** subsequent the selected road segment 410 fulfill - at least to some extent - the set ODD requirement(s). Said neural network may be represented by any feasible machine-learning process and/or machine-learned process suitable for and/or capable of being trained to select the road segment 410 rendering greatest extent of travelling within one or more set ODD requirements. The phrase "selecting a road segment" may refer to "outputting, filtering out and/or pinpointing a road segment", whereas "a road segment" in this context may refer to "the road segment", "an upcoming road segment" and/or "an optimal, recommended and/or preferred road segment". The phrase "out of said two or more upcoming road segments", on the other hand, may refer to "from and/or among said two or more upcoming road segments", whereas "by feeding one or more parameters related to said traffic information data and one or more parameters related to said vehicle geolocation through a neural network" may refer to "by utilizing a neural network to which is input one or more parameters related to said traffic information data and one or more parameters related to said vehicle geolocation" and/or "by applying a neural network to one or more parameters related to said traffic information data and one or more parameters related to said vehicle geolocation". Moreover, "one or more parameters" may throughout the disclosure refer to "one or more variables" and/or "at least one or more parameters", whereas "one or more parameters related to" throughout may refer to "one or more parameters associated with, reflecting, indicative of, revealing, carrying and/or holding". The phrase "parameters related to said traffic information data", on the other hand, may refer to "traffic information data parameters related to said traffic information data", whereas in a similar matter "parameters related to said vehicle geolocation" may refer to "vehicle geolocation parameters related to said vehicle geolocation".

Furthermore, the phrase "neural network" may refer to "machine-learned process and/or machine-learning process", whereas "neural network trained to select the road segment" may refer to "neural network trained to outputting, filter out and/or pinpointing the road segment" and/or "neural network trained to select the upcoming road segment". The phrase "road segment rendering greatest extent", on the other hand, may refer to "road segment enabling, supporting, leading to and/or providing greatest extent", and further to "road segment rendering fulfillment to greatest extent". Moreover, "rendering greatest extent of travelling" may refer to "rendering greatest extent of driving", "rendering greatest efficiency of travelling" and/or "rendering efficient and/or most efficient travelling", whereas "rendering greatest extent of travelling within one or more ODD requirements" may refer to "rendering greatest extent of travelling with one or more ODD requirements met and/or fulfilled" and/or "rendering maximum and/or optimal travelling within one or more ODD requirements". The phrase "one or more set ODD requirements", on the other hand, may refer to "one or more predeterminable ODD requirements" and/or "one or more ODD requirements at least partially set prior to training of said neural network". Furthermore, "trained to select the road segment rendering greatest extent of travelling within one or more set ODD requirements" may refer to "trained to learn selection of road segment for maximum and/or optimal travelling within one or more set ODD requirements", and according to an example further to "trained to, based on said one or more traffic information parameters and said one or more vehicle geolocation parameters, select the road segment rendering greatest extent of travelling within one or more set ODD requirements" and/or "trained to provide a learned policy which selects the road segment rendering greatest extent of travelling within one or more set ODD requirements".

The one or more set ODD requirements may be represented by any arbitrary feasible - e.g. known - ODD conditions e.g. of interest and/or relevant to achieve, such as during a vehicle expedition e.g. set out to collect field test data for verification of for instance active safety and autonomous driving. ODD may throughout the disclosure refer in a known manner to specific conditions under which an automated function or system such as an ADAS or AD system 21 may be designed to function and/or properly operate, for instance relating to speed range, roadway type, environmental conditions such as weather and/or daytime/nighttime, traffic limitations, geographical limitations, etc. The ODD requirement(s) may accordingly for instance be represented by one or more of vehicle speed(s), highway(s), road barrier(s), traffic jam(s), pedestrian crossing(s), road sign(s), etc.

The neural network may have been trained using as input thereto parameters related to any arbitrary number of road junctions 5 and road segments 4 of the map area of the digital map 3, and further using as input thereto parameters related to any arbitrary amount of historical and/or statistical traffic information, for any arbitrary number of points of time. Moreover, the neural network may have been trained using as input thereto any arbitrary number of ODD requirements. Furthermore, at least a first of the one or more set ODD requirements - for instance an infrastructure-related condition such as e.g. highway and/or barriers - may have been predetermined and used as input during initial training of the neural network. Optionally, at least a second of the one or more set ODD requirements - for instance an environmental-related condition such as e.g. vehicle speed - may have been set subsequent said initial training. Furthermore, the neural network may optionally have been - and/or be - continuously trained and/or updated during use thereof, such as during travelling with the vehicle 2 in an area corresponding to the map area of the digital map 3, e.g. during a vehicle expedition as exemplified above.

Optionally, the route planning system 1 may- e.g. by means of an optional **selected segment communicating unit 105** - be adapted and/or configured for communicating **data 7** indicative of the selected road segment 410 to a **vehicle display 23,** and/or to an ADAS or AD system 21 of the vehicle 2. Thereby, there is communicated from the route planning system 1 to one or more displays 23 on-board the vehicle 2 and/or to a vehicle's 2 ADAS or AD system - such as to the ADAS or AD system 21 exemplified in the foregoing - data 7 reflecting the selected upcoming road segment 410. Communicating data 7 indicative of the selected road segment 410 may be accomplished in any arbitrary feasible - e.g. known - manner, such as directly to the vehicle display 23 and/or ADAS or AD system 21, or to control units or nodes connected thereto or associated therewith. The phrase "communicating data" may refer to "providing data", "communicating digitally, electronically, wirelessly and/or by wire data" and/or "communicating in due time and/or when deemed feasible and/or safe, data", whereas "data" may refer to "one or more signals" and/or "a message". Moreover, "data indicative of said selected road segment" may refer to "data providing, comprising, insinuating, corresponding to and/or representative of the selected road segment". The vehicle display 23, on the other hand, may be represented by any one or more feasible displays known in the art, such as a digital display, for instance comprised in a dashboard of the vehicle 2, and/or a head-up display e.g. projected on a windscreen of the vehicle 2. Alternatively, the vehicle display 23 may be represented by an electronic user device such as a smartphone paired with and/or in connection with the vehicle 2. The phrase "vehicle display" may refer to "display of said vehicle" and/or "one or more vehicle displays on-board, at least partly comprised in and/or paired with said vehicle".

Further optionally, the route planning system 1 may then furthermore - e.g. by means of an optional **selected segment presenting unit 106** - be adapted and/or configured for presenting with support from the vehicle display 23 information indicative of the selected road segment 410. Thereby, information may be presented on the vehicle display 23, e.g. informing an occupant of said vehicle 32 - such as a driver thereof - of the selected upcoming road segment 410. Accordingly, by presenting which of the upcoming road segments 41 that with support from the trained neural network is and/or has been selected, the e.g. driver may be instructed and/or prompted to put into action and/or realize - i.e. to travel and/or drive along - said selected road segment 410. Presenting the information indicative of the selected road segment 410 may be accomplished in any arbitrary feasible - e.g. known - manner, such as by presenting said selected road segment 410 using text - e.g. letters, signs and/or symbols indicative of the selected road segment 410 - and/or graphically - e.g. by highlighting, emphasizing, marking out and/or in any other manner pointing out the selected road segment 410 - for instance on a displayed electronic map. The phrase "presenting with support from said vehicle display" may refer to "presenting utilizing said vehicle display" and/or "providing and/or illustrating with support from said vehicle display", whereas "information indicative of said selected road segment" may refer to "information comprising, insinuating, corresponding to and/or representative of the selected road segment". Moreover "presenting with support from said vehicle display information indicative of the selected road segment" may refer to "presenting with support from said vehicle display information indicative of the selected road segment, derived from said data indicative of the selected road segment" and/or "presenting based on said data indicative of the selected road segment, with support from said vehicle display, information indicative of the selected road segment".

Additionally or alternatively, optionally, the route planning system 1 may then furthermore - e.g. by means of an optional **selected segment actuating unit 107** - be adapted and/or configured for actuating with support from the ADAS or AD system 21, travelling along the selected road segment 410. Thereby, the ADAS or AD system 21 may put into action and/or realize - i.e. actuate travelling and/or driving along - the out of the upcoming road segments 41 - with support from the trained neural network - selected road segment 410. Actuating with support from the ADAS or AD system 21 travelling along the selected road segment 410 may be accomplished in any arbitrary feasible - e.g. known - manner. Moreover, the phrase "actuating with support from said ADAS or AD system" may refer to "actuating utilizing said ADAS or AD system" and/or "enabling and/or initiating with support from said ADAS or AD system", whereas "travelling along said selected road segment" may refer to "selection of said selected road segment", "driving along said selected road segment" and/or "travelling and/or driving onto said selected road segment". Moreover "actuating with support from said ADAS or AD system travelling along said selected road segment" may refer to "actuating with support from said ADAS or AD system travelling along said selected road segment derived from said data indicative of the selected road segment" and/or "actuating, based on said data indicative of the selected road segment, with support from said ADAS or AD system, travelling along said selected road segment".

Optionally, the selecting of a road segment 410 by feeding through a neural network may comprise feeding through a neural network trained with support from Reinforcement Learning, RL, or an equivalent or successor thereof, preferably - e.g. deep - Q-learning. Thereby, in that RL - and subsequently Q-learning and/or deep Q-learning - may solve complex optimization challenges such as route planning optimization, there may be utilized a machine-learning process both suitable and capable of being trained to provide a policy which selects the road segment 410 rendering greatest extent of travelling within one or more set ODD requirements.

The following exemplifying prerequisites may have been - and/or be - utilized for carrying out the inventive concept:

- The map area of the digital map 3, with all - or essentially all - road segments 4 identified
- Traffic information e.g. traffic flow - and subsequently traffic information data 6 - for respective road segment 4
- The positioning system 22 for locating the vehicle 2 in the digital map 3 in - or essentially in - real-time, where the vehicle geolocation for instance is represented by XY or XYZ coordinates
- As an example, average speed and/or speed limits of the road segments 4
- Set of possible actions in and/or at respective road junction 5

Moreover, training the neural network - such as through simulation - with support from RL - for instance Q-learning and/or deep Q-learning - may for instance have been - and/or be - accomplished utilizing commonly known Markow Decision Process, MDP, for decision making modeling, where an **environment** thereof may be characterized by a traffic situation at a selected location and where an **agent** thereof may be characterized by a test vehicle interacting with said environment. Moreover,

- State: s is a finite set of states
- A is a finite set of actions, A_s is the set of actions available at state s
- P_a(s, s') is the probability that taking action a at state s at time t will take the agent to state s' at time t+1
- R_a(s, s') is the immediate reward received after transitioning from state s to state s', due to action a
- $\gamma$: discount factor that controls the importance of future rewards

Furthermore, the following definitions may have been - and/or be - utilized:

- Policy: agent uses the policy to choose which action to perform at different states, so it is a mapping from states to the actions and it is often denoted by the symbol π:

$$\pi(s) : \mathbb{S} \to \mathbb{A}$$

- State value function: this is often denoted by V(s). The value function represent how good is a state for an agent to be in. It is equal to expected total reward for an agent starting from state s and following the policy thereafter. More formally, we have (here the reward R is denoted by r_i):

$$V^\pi(s) = \mathbb{E}[\sum_{i=1}^{T} \gamma^{i-1} r_i] \quad \forall s \in \mathbb{S}$$

- State-action value function (Q function): It specifies how good it is for an agent to perform a given action in a state, and is usually denoted by Q(s, a):

$$Q^\pi(s, a) = \mathbb{E}_\pi \left[ R_t | s_t = s, a_t = a \right]$$

Furthermore, one or more of the following exemplifying definitions may have been - and/or be - utilized:

- **State:** s = (x, t, n), where x is a vector representing the agent location - such as the vehicle geolocation - e.g. longitudinal and lateral, t is a vector representing the time, e.g. time of the day, day of the week, or date, and n is an optional vector showing how many times each of the possible actions are previously taken - e.g. during the same route e.g. vehicle expedition - in this state. Providing n may be mandatory should unique scenes be preferred. Moreover, n may be updated and tracked over time using for instance a lookup table; whenever action a is taken at state s, the corresponding field in the lookup table may be increased by one; this table may for instance be sparse after learning phase since most of the road junctions 5 may not necessarily be visited and most of the actions in the visited road junctions 5 may not necessarily be taken.

- **Action:** The vehicle 2 or a driver thereof may follow the road and take all the safety measures, such as stop at traffic lights; this does not affect the agent reward as long as the suggested route is followed. Total number of possible actions in each state may be limited to a small number, such as exemplifying eight, which e.g. may be NW, N, NE, E, ES, S, SW, W directions. All the physically available actions in the state s may be mapped to this set by a measure of closeness; if an action is not possible or does not exist in and/or at a road junction 5, either the corresponding state value may be set to a fixed large negative number, or it may be blocked from the set of possible actions for that state.

- **Reward:** An exemplifying reward system may for instance be represented by:

  ○ Should an exemplifying desired speed - i.e. ODD requirement(s) - be met:

    ▪ A plus reward, e.g. +1, for every x meters, such as exemplifying every 25 or 100 meters; this number may for instance be decided based on the average and/or minimum distance between road junctions 5 in the map area.
    ▪ If unique scene is required, lower rewards may be given should the same road segment 4 be visited more than one time; thus for the second time and so forth that the agent passes this road segment - i.e. has taken the same action a at the state s - the reward may be computed as +1/N(s,a) for every x meters, where N(s,a) is the number of times action a is taken at state s previously. N(s,a) may be initialized to 0 for all states and actions and may be updated in a lookup table as indicated above.

  ○ Should an exemplifying desired speed - i.e. ODD requirement(s) - not be met:

    ▪ A minus reward, e.g. -1/10, for every x meters.

Moreover, to learn the policy, deep Q-learning may in an exemplifying manner be used as follows:

- Determine a test vehicle start position in the digital map 3
- Drive test vehicle until nearing a road junction 5
- Q-learning algorithm trains a - e.g. deep - neural network which maps the state s to a set of state action value functions, e.g. with 8 actions, $Q(s,a\_1),... Q(s,a\_8)$. The parameters of this network may be denoted by w, and they may be initialized to some random numbers. The following steps may then be repeated:

  1. Choose an action $a\_t$ according to epsilon-greedy policy $\pi$ a. Observe reward $r\_\{t+1\}$ and $s\_\{t+1\}$ after applying the action b. The discount factor gamma may be set to a number very close to 1 values in order to assist in navigating along non-rewarding road segments 4 to a different region of the map area which can offer high rewards
  2. Store transition $s\_t,a\_t,r\_\{t+1\},s\_\{t+1\}$ in a replay memory D
  3. Sample mini-batch of transitions (s,a,r,s') from D
  4. Compute q learning target with respect to old parameters, $w\_\{old\}$
  5. Optimize MSE between Q network and targets by updating the parameters w using stochastic gradient descent method
  6. Drive until reaching the next road junction 5 and go to step 1

- Once the algorithm is converged, the trained Q network may be used to obtain a greedy policy.

In accordance with the foregoing, an optimal policy may thus be learned - e.g. offline in a simulation environment - which learned policy then may be used in real-time to suggest which road segment 4 the vehicle 2 should be taking in and/or at a road junction 5. The learned policy may further be used to simulate e.g. a vehicle expedition and compute the expected efficiency - e.g. defined as number of kilometers within ODD requirements out of total number of driving and/or travelling - before actually going on said vehicle expedition, to learn whether a selected area or city may be a satisfying choice for the given ODD requirements. To do this, once a learned policy is available, a test vehicle is driven in the simulation using the map area of the digital map 3 and for instance exemplifying speed information. Once the test vehicle has been driven expected number of kilometers within the ODD requirements, the efficiency can be computed and can be used to finalize the expedition plan and/or to change it. To plan for new cities i.e. other map areas of the digital map 3, one can use transfer learning to initialize parameters of the neural network using the already learned ones for faster learning.

As further shown in **Fig. 2,** which is a schematic block diagram illustrating an exemplifying route planning system 1 according to embodiments of the disclosure, the route planning system 1 comprises a vehicle location determining unit 101, an upcoming road identifying unit 102, a traffic information deriving unit 103, a road segment selecting unit 104, an optional selected segment communicating unit 105, an optional selected segment presenting unit 106, and an optional selected segment actuating unit 107, all of which already have been described in greater detail above. Furthermore, the embodiments herein for road segment selection along a route to be travelled by the vehicle 2, may be implemented through one or more processors, such as a **processor 108** - for instance a graphics processing unit, GPU, and/or a central processing unit, CPU - together with computer program code for performing the functions and actions of the embodiments herein. Said program code may also be provided as a computer program product, for instance in the form of a data carrier carrying computer program code for performing the embodiments herein when being loaded into the route planning system 1. One such carrier may be in the form of a CD ROM disc and/or a hard drive, it is however feasible with other data carriers. The computer program code may furthermore be provided as pure program code on a server and downloaded to the route planning system 1, such as downloaded wirelessly e.g. from an off-board server. The route planning system 1 may further comprise a **memory 109** comprising one or more memory units. The memory 109 may be arranged to be used to store e.g. information, and further to store data, configurations, schedulings, and applications, to perform the methods herein when being executed in the route planning system 1. For instance, the computer program code may be implemented in the firmware, stored in FLASH memory 109 of an embedded processor 108. Furthermore, the vehicle location determining unit 101, the upcoming road identifying unit 102, the traffic information deriving unit 103, the road segment selecting unit 104, the optional selected segment communicating unit 105, the optional selected segment presenting unit 106, the optional selected segment actuating unit 107, the optional processor 108 and/or the optional memory 109, may at least partly be comprised in one or more **nodes 110** e.g. ECUs of the vehicle 2, e.g. in and/or in association with the optional ADAS or ADS system 21, and according to an example additionally or alternatively at least partly comprised in one or more automotive clouds and/or off-board servers adapted to communicate with said vehicle 2. Those skilled in the art will also appreciate that said units 101-107 described above as well as any other unit, interface, system, controller, module, device, element, feature, or the like described herein may refer to, comprise, include, and/or be implemented in or by a combination of analog and digital circuits, and/or one or more processors configured with software and/or firmware, e.g. stored in a memory such as the memory 109, that when executed by the one or more processors such as the processor 108 perform as described herein. One or more of these processors, as well as the other digital hardware, may be included in a single Application-Specific Integrated Circuitry, ASIC, or several processors and various digital hardware may be distributed among several separate components, whether individually packaged or assembled into a System-on-a-Chip, SoC.

Further shown in Fig. 2 is the ADAS or AD system 21, the positioning system 22, the vehicle display 23, the digital map 3, the traffic information data 6 and the data 7 indicative of the selected road segment 410, all of which have been discussed in greater detail above.

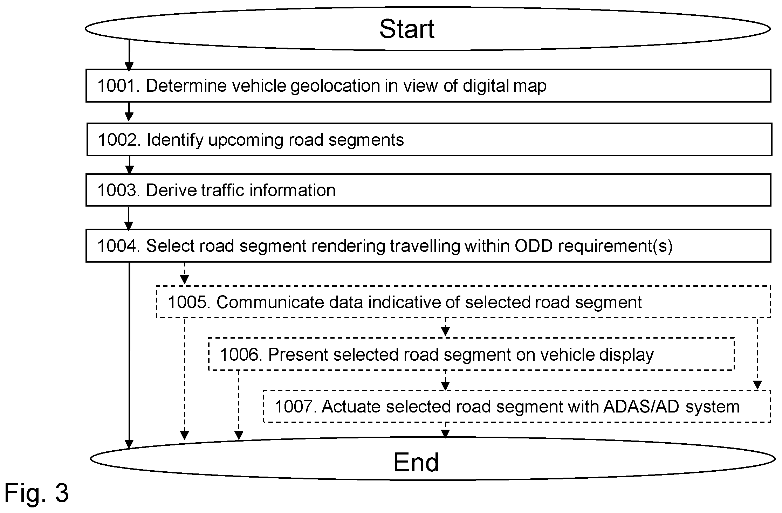

**Fig. 3** is a flowchart depicting an exemplifying method performed by a route planning system 1 according to embodiments of the disclosure. Said method is for road segment selection along a route to be travelled by a vehicle 2. The exemplifying method, which may be continuously repeated, comprises one or more of the following actions discussed with support from Figs. 1-2. Moreover, the actions may be taken in any suitable order and/or one or more actions may be performed simultaneously and/or in alternate order where applicable. For instance, Action 1002 and Action 1003 may be performed simultaneously and/or in alternate order.

### Action 1001

In Action 1001, the route planning system 1 determines - e.g. with support from the vehicle location determining unit 101 - with support from a positioning system 22, a geolocation of the vehicle 2 in view of a digital map 3.

### Action 1002

In Action 1002, the route planning system 1 identifies - e.g. with support from the upcoming road identifying unit 102 - in the digital map 3 based on the vehicle geolocation, an upcoming road junction 51 which the vehicle 2 is approaching and/or is located at, which road junction 51 comprises two or more upcoming road segments 41.

### Action 1003

In Action 1003, the route planning system 1 derives - e.g. with support from the traffic information deriving unit 103 - traffic information data 6 applicable for a map area of the digital map 3 covering a plurality of road segments 4 including the two or more upcoming road segments 41.

### Action 1004

In Action 1004, the route planning system 1 selects - e.g. with support from the road segment selecting unit 104 - a road segment 410 out of the two or more upcoming road segments 41 by feeding one or more parameters related to the traffic information data 6 and one or more parameters related to the vehicle geolocation through a neural network trained to select the road segment 410 rendering greatest extent of travelling within one or more ODD requirements.

Optionally, step 1004 of selecting a road segment 410 by feeding through a neural network may comprise - and/or the road segment selecting unit 104 may then be adapted and/or configured for - feeding through a neural network trained with support from Reinforcement Learning, RL, or an equivalent or successor thereof.

Further optionally, step 1004 of selecting a road segment 410 by feeding through a neural network may then comprise - and/or the road segment selecting unit 104 may then be adapted and/or configured for - feeding through a neural network trained with support from, e.g. deep, Q-learning.

### Action 1005

In optional Action 1005, the route planning system 1 may communicate - e.g. with support from the optional selected segment communicating unit 105 - data 7 indicative of the selected road segment 410 to a vehicle display 23, and/or to an ADAS or AD system 21 of the vehicle 2.

### Action 1006

In optional Action 1006, the route planning system 1 may then further present - e.g. with support from the optional selected segment presenting unit 106 - with support from said vehicle display 23, information indicative of the selected road segment 410.

### Action 1006

Additionally or alternatively, in optional Action 1006, the route planning system 1 may then further actuate - e.g. with support from the optional selected segment actuating unit 106 - with support from the ADAS or AD system 21, travelling along the selected road segment 410.

The person skilled in the art realizes that the present disclosure by no means is limited to the preferred embodiments described above. On the contrary, many modifications and variations are possible within the scope of the appended claims. It should furthermore be noted that the drawings not necessarily are to scale and the dimensions of certain features may have been exaggerated for the sake of clarity. Emphasis is instead placed upon illustrating the principle of the embodiments herein.

### Claims

1. A method comprising:

    training a neural network to select a road segment rendering greatest extent of travelling within one or more set Operational Design Domain, ODD, requirements, the training using as input ODD requirements of interest to fulfill during travelling, vehicle geolocations, road junctions and/or road segments of a map area of a digital map, points of time, and/or derived traffic information pertinent to said points of time, performed by a route planning system (1) of a vehicle (2) for road segment selection along a route to be travelled by said vehicle (2), said method comprising:

    *determining* (1001) with support from a positioning system (22), a geolocation of said vehicle (2) in view of a digital map (3);
    *identifying* (1002) in said digital map (3) based on said vehicle geolocation, an upcoming road junction (51) which said vehicle (2) is approaching and/or is located at, said upcoming road junction (51) comprising two or more upcoming road segments (41);
    *deriving* (1003) traffic information data (6) applicable for a map area of said digital map (3) covering a plurality of road segments (4) including said two or more upcoming road segments (41); and

    selecting (1004) a road segment (410) out of said two or more upcoming road segments (41) by feeding one or more parameters related to said traffic information data (6) and one or more parameters related to said vehicle geolocation through the neural network, such that the selected road segment (410) renders the greatest extent of travelling within the one or more set ODD requirements.

2. The method according to claim 1, further comprising:
    *communicating* (1005) data (7) indicative of the selected road segment (410) to a vehicle display (23), and/or to an advanced driver-assistance system, ADAS, or automated driving, AD, system (21) of said vehicle (2).

3. The method according to claim 2, further comprising:
    *presenting* (1006) with support from said vehicle display (23) information indicative of said selected road segment (410).

4. The method according to claim 2 or 3, further comprising:
    *actuating* (1007) with support from said AD system (21), travelling along said selected road segment (410).

5. The method according to any one of claims 1-4, wherein said neural network is trained with support from Reinforcement Learning, RL, or an equivalent thereof.

6. The method according to claim 5, wherein wherein said neural network is trained with support from deep Q-learning.

7. A **route planning system** (1) of a vehicle (2) for road segment selection along a route to be travelled by said vehicle (2), said route planning system (1) comprising:

a **vehicle location determining unit** (101) for *determining* (1001) with support from a positioning system (22), a geolocation of said vehicle (2) in view of a digital map (3);
an **upcoming road identifying unit** (102) for *identifying* (1002) in said digital map (3) based on said vehicle geolocation, an upcoming road junction (51) which said vehicle (2) is approaching and/or is located at, said upcoming road junction (51) comprising two or more upcoming road segments (41);
a **traffic information deriving unit** (103) for *deriving* (1003) traffic information data (6) applicable for a map area of said digital map (3) covering a plurality of road segments (4) including said two or more upcoming road segments (41); and
a **road segment selecting unit** (104) for *selecting* (1004) a road segment (410) out of said two or more upcoming road segments (41) by feeding one or more parameters related to said traffic information data (6) and one or more parameters related to said vehicle geolocation through a neural network trained to select the road segment (410) rendering greatest extent of travelling within one or more set Operational Design Domain, ODD, requirements, said neural network having been trained using as input ODD requirements of interest to fulfill during travelling, vehicle geolocations, road junctions and/or the road segments of said map area of said digital map, points of time, and/or derived traffic information pertinent said points of time.

8. The route planning system (1) according to claim 7, further comprising:
a **selected segment communicating unit** (105) for *communicating* (1005) data (7) indicative of the selected road segment (410) to a vehicle display (23), and/or to an advanced driver-assistance system, ADAS, or automated driving, AD, system (21) of said vehicle (2).

9. The route planning system (1) according to claim 8, further comprising:
a **selected segment presenting unit** (106) for *presenting* (1006) with support from said vehicle display (23) information indicative of said selected road segment (410).

10. The route planning system (1) according to claim 8 or 9, further comprising:
a **selected segment actuating unit** (107) for *actuating* (1007) with support from said AD system (21), travelling along said selected road segment (410).

11. The route planning system (1) according to any one of claims 7-10, wherein said neural network is trained with support from Reinforcement Learning, RL, or an equivalent thereof.

12. The route planning system (1) according to claim 11, wherein said neural network is trained with support from deep Q-learning.

13. A vehicle (2) comprising a route planning system (1) according to any one of claims 7-12.

14. A computer program product comprising a computer program containing computer program code means arranged to cause a computer or a processor to execute the steps of a method according to any of claims 1-6, stored on a computer-readable medium or a carrier wave.

15. A non-volatile computer readable storage medium having stored thereon the computer program product of claim 14.

**Patentansprüche**

1. Verfahren, umfassend:

Trainieren eines neuronalen Netzwerks zur Auswahl eines Straßenabschnitts, der den größten Teil der Fahrt innerhalb einer oder mehrerer festgelegter Anforderungen an die Operational Design Domain, ODD, abdeckt, wobei das Training die während der Fahrt zu erfüllenden ODD-Anforderungen, Fahrzeugstandorte, Straßenkreuzungen und/oder Straßenabschnitte eines Kartenbereichs einer digitalen Karte, Zeitpunkte und/oder abgeleitete Verkehrsinformationen, die für diese Zeitpunkte relevant sind, als Eingabe verwendet,
das von einem Streckenplanungssystem (1) eines Fahrzeugs (2) zur Auswahl von Straßenabschnitten entlang einer von dem Fahrzeug (2) zu fahrenden Strecke durchgeführt wird, das Verfahren umfassend:

*Bestimmen* (1001) mit Unterstützung eines Positionierungssystems (22) einer Geolokalisierung des Fahrzeugs (2) unter Berücksichtigung einer digitalen Karte (3);
*Identifizieren* (1002) in der digitalen Karte (3) basierend auf der Geolokalisierung des Fahrzeugs einer bevorstehenden Straßenkreuzung (51), der sich das Fahrzeug (2) nähert und/oder an der es sich befindet, wobei die bevorstehende Straßenkreuzung (51) zwei oder mehr bevorstehende Straßenabschnitte (41) umfasst;

*Ableiten* (1003) von Verkehrsinformationsdaten (6), die für einen Kartenbereich der digitalen Karte (3) gelten, der eine Vielzahl von Straßenabschnitten (4) einschließt, einschließlich der zwei oder mehr bevorstehenden Straßenabschnitte (41); und Auswählen (1004) eines Straßenabschnitts (410) aus den zwei oder mehr bevorstehenden Straßenabschnitten (41), indem ein oder mehrere Parameter, die sich auf die Verkehrsinformationsdaten (6) beziehen, und ein oder mehrere Parameter, die sich auf die Geolokalisierung des Fahrzeugs beziehen, über das neuronale Netzwerk eingegeben werden, so dass der ausgewählte Straßenabschnitt (410) den größten Teil der Fahrt innerhalb der einen oder mehreren festgelegten ODD-Anforderungen darstellt.

2. Verfahren nach Anspruch 1, weiter umfassend:
*Kommunizieren* (1005) von Daten (7), die den ausgewählten Straßenabschnitt (410) anzeigen, an eine Fahrzeuganzeige (23) und/oder an ein Fahrerassistenzsystem, ADAS, oder ein automatisiertes Fahr-, AD, -system (21) des Fahrzeugs (2).

3. Verfahren nach Anspruch 2, weiter umfassend:
*Präsentieren* (1006) mit Unterstützung durch die Fahrzeuganzeige (23) von Informationen, die den ausgewählten Straßenabschnitt (410) anzeigen.

4. Verfahren nach Anspruch 2 oder 3, weiter umfassend:
*Betätigen* (1007) mit Unterstützung durch das genannte AD-System (21), das entlang des genannten ausgewählten Straßenabschnitts (410) fährt.

5. Verfahren nach einem der Ansprüche 1-4, wobei das neuronale Netzwerk mit Unterstützung durch Verstärkungslernen, RL, oder einem gleichwertigen Verfahren trainiert wird.

6. Verfahren nach Anspruch 5, wobei wobei das neuronale Netzwerk mit Unterstützung durch Deep Q-Learning trainiert wird.

7. **Streckenplanungssystem** (1) eines Fahrzeugs (2) zur Auswahl von Straßenabschnitten entlang einer von dem Fahrzeug (2) zu befahrenden Strecke, wobei das Streckenplanungssystem (1) umfasst:

eine **Fahrzeuglokalisierungsbestimmungseinheit** (101) zum *Bestimmen (1001)* mit Unterstützung eines Positionierungssystems (22) einer Geolokalisierung des Fahrzeugs (2) unter Berücksichtigung einer digitalen Karte (3); eine *bevorstehende* **Straßenidentifizierungseinheit** (102) zum *Identifizieren* (1002) in der digitalen Karte (3) basierend auf der Geolokalisierung des Fahrzeugs einer bevorstehenden Straßenkreuzung (51), der sich das Fahrzeug (2) nähert und/oder an der es sich befindet, wobei die bevorstehende Straßenkreuzung (51) zwei oder mehr bevorstehende Straßenabschnitte (41) umfasst; eine **Verkehrsinformationsableitungseinheit** (103) zum *Ableiten* (1003) von Verkehrsinformationsdaten (6), die für einen Kartenbereich der digitalen Karte (3) gelten, der eine Vielzahl von Straßenabschnitten (4) einschließt, einschließlich der zwei oder mehr bevorstehenden Straßenabschnitte (41); und eine **Straßenabschnittsauswahleinheit** (104) zum *Auswählen* (1004) eines Straßenabschnitts (410) aus den zwei oder mehr bevorstehenden Straßenabschnitten (41) durch Eingabe eines oder mehrerer Parameter, die sich auf die Verkehrsinformationsdaten (6) beziehen, und eines oder mehrerer Parameter, die sich auf die Geolokalisierung des Fahrzeugs beziehen, über ein neuronales Netzwerk, das darauf trainiert ist, den Straßenabschnitt (410) auszuwählen, der den größten Umfang an Fahrten innerhalb einer oder mehrerer festgelegter Anforderungen des Operational Design Domain, ODD, ermöglicht, wobei das neuronale Netzwerk unter Verwendung von ODD-Anforderungen, die während der Fahrt zu erfüllen sind, Fahrzeuggeolokalisierungen, Straßenkreuzungen und/oder den Straßenabschnitten des Kartenbereichs der digitalen Karte, Zeitpunkten und/oder abgeleiteten Verkehrsinformationen, die für diese Zeitpunkte relevant sind, als Eingabe trainiert wurde.

8. Streckenplanungssystem (1) nach Anspruch 7, weiter umfassend:
eine **Ausgewählten-Abschnitt-Kommunizierungseinheit** (105) zum *Kommunizieren* (1005) von Daten (7), die den ausgewählten Straßenabschnitt (410) anzeigen, an eine Fahrzeuganzeige (23) und/oder an ein fortschrittliches Fahrerassistenzsystem, ADAS, oder ein automatisiertes Fahr-, AD, -system (21) des Fahrzeugs (2) zu übermitteln.

9. Streckenplanungssystem (1) nach Anspruch 8, weiter umfassend:
eine **Ausgewählten-Abschnitt-Darstellungseinheit** (106) zum *Präsentieren* (1006) mit Unterstützung durch die Fahrzeuganzeige (23) von Informationen, die den ausgewählten Straßenabschnitt (410) anzeigen.

10. Streckenplanungssystem (1) nach Anspruch 8 oder 9, weiter umfassend:
eine **Ausgewählten-Abschnitt-Betätigungseinheit** (107) zum *Betätigen (1007)* mit Unterstützung durch das genannte AD-System (21), das entlang des genannten ausgewählten Straßenabschnitts (410) fährt.

11. Streckenplanungssystem (1) nach einem der Ansprüche 7-10, wobei das neuronale Netzwerk mit Unterstützung durch Verstärkungslernen, RL, oder einem gleichwertigen Verfahren trainiert wird.

12. Streckenplanungssystem (1) nach Anspruch 11, wobei das neuronale Netzwerk mit Unterstützung durch Deep Q-Learning trainiert wird.

13. Fahrzeug (2), umfassend ein Streckenplanungssystem (1) nach einem der Ansprüche 7-12.

14. Computerprogrammprodukt, umfassend ein Computerprogramm, das Computerprogrammcode-Mittel enthält, die dazu eingerichtet sind, einen Computer oder Prozessor dazu zu veranlassen, die Schritte eines Verfahrens nach einem der Ansprüche 1-6 auszuführen, das auf einem computerlesbaren Medium oder auf einer Trägerwelle gespeichert ist.

15. Nichtflüchtiges, computerlesbares Speichermedium, auf dem das Computerprogrammprodukt nach Anspruch 14 gespeichert ist.


**Revendications**

1. Procédé comprenant :

la formation d'un réseau neuronal pour qu'il sélectionne un segment de route restituant la plus grande distance de déplacement conformément à une ou plusieurs exigences fixées de domaine de conception opérationnelle, ODD, la formation utilisant en entrée des exigences ODD présentant un intérêt à satisfaire durant le déplacement, des géolocalisations de véhicule, des carrefours routiers et/ou des segments de route d'une zone de carte d'une carte numérique, des instants et/ou des informations de circulation déduites pertinentes pour lesdits instants,
mis en œuvre par un système (1) de planification d'itinéraire d'un véhicule (2) pour la sélection de segment de route le long d'un trajet à parcourir par ledit véhicule (2), ledit procédé comprenant :

la détermination (1001) avec l'aide d'un système de positionnement (22), d'une géolocalisation dudit véhicule (2) au vu d'une carte numérique (3) ;
*l'identification* (1002) dans ladite carte numérique (3) sur la base de ladite géolocalisation de véhicule, d'un carrefour routier imminent (51) sur lequel arrive ledit véhicule (2) et/ou auquel il est situé, ledit carrefour routier imminent (51) comprenant deux segments de route imminents (41) ou plus ;
*la déduction* (1003) de données (6) d'informations de circulation applicables à une zone de carte de ladite carte numérique (3) couvrant une pluralité de segments de route (4) incluant lesdits deux segments de route imminents (41) ou plus ; et
la sélection (1004) d'un segment de route (410) parmi lesdits deux segments de route imminents (41) ou plus en introduisant un ou plusieurs paramètres liés auxdites données (6) d'informations de circulation et un ou plusieurs paramètres liés à ladite géolocalisation de véhicule dans le réseau neuronal, de sorte que le segment de route sélectionné (410) restitue la plus grande distance de déplacement conformément aux une ou plusieurs exigences ODD fixées.

2. Procédé selon la revendication 1, comprenant en outre :
*la communication* (1005) des données (7) indiquant le segment de route sélectionné (410) à un dispositif d'affichage (23) de véhicule, et/ou à un système avancé d'aide à la conduite, ADAS, ou à un système de conduite automatisée, AD, (21) dudit véhicule (2).

3. Procédé selon la revendication 2, comprenant en outre :
*la présentation* (1006) avec l'aide dudit dispositif d'affichage (23) de véhicule d'informations indiquant ledit segment de route sélectionné (410).

4. Procédé selon la revendication 2 ou la revendication 3, comprenant en outre :
*l'actionnement* (1007) avec l'aide dudit système AD (21), d'un déplacement le long dudit segment de route sélectionné (410).

5. Procédé selon l'une quelconque des revendications 1 à 4, dans lequel ledit réseau neuronal est formé avec l'aide de l'apprentissage par renforcement, RL, ou d'un équivalent de celui-ci.

6. Procédé selon la revendication 5, dans lequel dans lequel ledit réseau neuronal est formé avec l'aide de l'apprentissage Q profond.

7. **Système (1) de planification d'itinéraire** d'un véhicule (2) pour la sélection de segment de route le long d'un trajet à parcourir par ledit véhicule (2), ledit système (1) de planification d'itinéraire comprenant :

une **unité (101) de détermination de position de véhicule** pour *déterminer* (1001) avec l'aide d'un système de positionnement (22), une géolocalisation dudit véhicule (2) au vu d'une carte numérique (3) ;
une **unité (102) d'identification de route *imminente*** pour *identifier* (1002) dans ladite carte numérique (3) sur la base de ladite géolocalisation de véhicule, un carrefour routier imminent (51) sur lequel arrive ledit véhicule (2) et/ou auquel il est situé, ledit carrefour routier imminent (51) comprenant deux segments de route imminents (41) ou plus ;
une **unité (103) de déduction d'informations de circulation** pour *déduire* (1003) des données (6) d'informations de circulation applicables à une zone de carte de ladite carte numérique (3) couvrant une pluralité de segments de route (4) incluant lesdits deux segments de route imminents (41) ou plus ; et
une **unité (104) de sélection de segment de route** pour *sélectionner* (1004) un segment de route (410) parmi lesdits deux segments de route imminents (41) ou plus en introduisant un ou plusieurs paramètres liés auxdites données (6) d'informations de circulation et un ou plusieurs paramètres liés à ladite géolocalisation de véhicule dans un réseau neuronal formé pour sélectionner le segment de route (410) restituant la plus grande distance de déplacement conformément à une ou plusieurs exigences fixées de domaine de conception opérationnelle, ODD, ledit réseau neuronal ayant été formé en utilisant en entrée des exigences ODD présentant un intérêt à satisfaire durant le déplacement, des géolocalisations de véhicule, des carrefours routiers et/ou les segments de route de ladite zone de carte de ladite carte numérique, des instants et/ou des informations de circulation déduites pertinentes pour lesdits instants.

8. Système (1) de planification d'itinéraire selon la revendication 7, comprenant en outre :
une **unité (105) de communication de segment sélectionné** pour *communiquer* (1005) des données (7) indiquant le segment de route sélectionné (410) à un dispositif d'affichage (23) de véhicule, et/ou à un système avancé d'aide à la conduite, ADAS, ou à un système de conduite automatisée, AD, (21) dudit véhicule (2).

9. Système (1) de planification d'itinéraire selon la revendication 8, comprenant en outre :
une **unité (106) de présentation de segment sélectionné** pour *présenter* (1006) avec l'aide dudit dispositif d'affichage (23) de véhicule des informations indiquant ledit segment de route sélectionné (410).

10. Système (1) de planification d'itinéraire selon la revendication 8 ou la revendication 9, comprenant en outre :
une **unité (107) d'actionnement de segment sélectionné** pour *actionner* (1007) avec l'aide dudit système AD (21), le déplacement le long dudit segment de route sélectionné (410).

11. Système (1) de planification d'itinéraire selon l'une quelconque des revendications 7 à 10, dans lequel ledit réseau neuronal est formé avec l'aide de l'apprentissage par renforcement, RL, ou d'un équivalent de celui-ci.

12. Système (1) de planification d'itinéraire selon la revendication 11, dans lequel ledit réseau neuronal est formé avec l'aide de l'apprentissage Q profond.

13. Véhicule (2) comprenant un système (1) de planification d'itinéraire selon l'une quelconque des revendications 7 à 12.

14. Produit de programme informatique comprenant un programme informatique contenant des moyens de code de programme informatique conçus pour amener un ordinateur ou un processeur à exécuter les étapes d'un procédé selon l'une quelconque des revendications 1 à 6, stocké sur un support lisible par ordinateur ou une onde porteuse.

15. Support de stockage non volatile, lisible par ordinateur, présentant le produit de programme informatique selon la revendication 14 stocké sur celui-ci.

Fig. 1

1 Route planning system

1 Route planning system

21 ADAS/AD system

22 Positioning system

23 Vehicle display

3 Digital map

109 Memory

110 Node

108 CPU

101 Vehicle location determining unit

102 Upcoming road identifying unit

103 Traffic information deriving unit

104 Road segment selecting unit

105 Selected segment communicat. unit

106 Selected segment presenting unit

107 Selected segment actuating unit

Fig. 2

```
                    ┌─────────────────────────────────────────────────┐
                    │                    Start                        │
                    └─────────────────────────────────────────────────┘
                                         │
                                         ▼
              ┌──────────────────────────────────────────────────────────┐
              │ 1001. Determine vehicle geolocation in view of digital map│
              └──────────────────────────────────────────────────────────┘
                                         │
                                         ▼
              ┌──────────────────────────────────────────────────────────┐
              │ 1002. Identify upcoming road segments                     │
              └──────────────────────────────────────────────────────────┘
                                         │
                                         ▼
              ┌──────────────────────────────────────────────────────────┐
              │ 1003. Derive traffic information                          │
              └──────────────────────────────────────────────────────────┘
                                         │
                                         ▼
              ┌──────────────────────────────────────────────────────────┐
              │ 1004. Select road segment rendering travelling within ODD │
              │       requirement(s)                                      │
              └──────────────────────────────────────────────────────────┘
                                         │
                                         ▼
                ┌─ ─ ─ ─ ─ ─ ─ ─ ─ ─ ─ ─ ─ ─ ─ ─ ─ ─ ─ ─ ─ ─ ─ ─ ─ ─ ─┐
                  1005. Communicate data indicative of selected road segment
                └─ ─ ─ ─ ─ ─ ─ ─ ─ ─ ─ ─ ─ ─ ─ ─ ─ ─ ─ ─ ─ ─ ─ ─ ─ ─ ─┘
                                         │
                                         ▼
                  ┌─ ─ ─ ─ ─ ─ ─ ─ ─ ─ ─ ─ ─ ─ ─ ─ ─ ─ ─ ─ ─ ─ ─ ─ ─┐
                    1006. Present selected road segment on vehicle display
                  └─ ─ ─ ─ ─ ─ ─ ─ ─ ─ ─ ─ ─ ─ ─ ─ ─ ─ ─ ─ ─ ─ ─ ─ ─┘
                                         │
                                         ▼
                    ┌─ ─ ─ ─ ─ ─ ─ ─ ─ ─ ─ ─ ─ ─ ─ ─ ─ ─ ─ ─ ─ ─ ─ ─┐
                      1007. Actuate selected road segment with ADAS/AD system
                    └─ ─ ─ ─ ─ ─ ─ ─ ─ ─ ─ ─ ─ ─ ─ ─ ─ ─ ─ ─ ─ ─ ─ ─┘
                                         │
                                         ▼
                    ┌─────────────────────────────────────────────────┐
                    │                     End                         │
                    └─────────────────────────────────────────────────┘
```

Fig. 3

**REFERENCES CITED IN THE DESCRIPTION**

**Patent documents cited in the description**

- US 2019257661 A1

- US 10816349 B2